# EUROPÄISCHE PATENTSCHRIFT

(11) **EP 3 565 981 B1**
(45) Veröffentlichungstag und Bekanntmachung des Hinweises auf die Patenterteilung: **17.11.2021**
(21) Anmeldenummer: 17829987.1
(22) Anmeldetag: 22.12.2017
(51) Int. Cl.: F16C 19/18, F16C 33/58, F03D 80/70

(54) **MEHRREIHIGES GROSSWÄLZLAGER**
MULTI-ROW LARGE-DIAMETER ROLLING BEARING
PALIER À ROULEMENT DE GRANDE DIMENSION À PLUSIEURS RANGÉES

(30) Priorität: 08.02.2017 DE 202017000692 U
(43) Veröffentlichungstag der Anmeldung: 13.11.2019
(73) Patentinhaber: Liebherr-Components Biberach GmbH, 88400 Biberach/Riss (DE)
(72) Erfinder: SEDLMAIER, Matthias, 88400 Biberach (DE)
(74) Vertreter: Thoma, Michael
(86) Internationale Anmeldenummer: PCT/EP2017/084528
(87) Internationale Veröffentlichungsnummer: WO 2018/145804

(56) Entgegenhaltungen:
- DE-A1- 1 708 558
- DE-A1-102010 027 011
- DE-A1-102012 004 329
- DE-U- 1 897 209
- JP-A- 2008 138 736
- JP-A- 2011 007 247
- US-A- 3 002 429
- US-A- 3 144 278

## Beschreibung

Die vorliegende Erfindung betrifft ein mehrreihiges Großwälzlager umfassend einen Innenring, einen Außenring sowie zumindest zwei Wälzlagerreihen zwischen Innen- und Außenring, wobei die zumindest zwei Wälzlagerreihen jeweils als Vierpunkt-Kugellager zum Abstützen von axialen und radialen Kräften ausgebildet und mit ihren Laufflächen zumindest näherungsweise in axialer Richtung orientiert sind.

Mittenfreie Großwälzlager zeigen beispielsweise die Schriften DE 18 97 209 U und US 3,144,278 A, wobei die Laufbahnen der darin gezeigten Großwälzlager mit Drahteinsätzen versehen sind, um die als Kugeln ausgebildeten Wälzkörper an vier Punkten abzustützen. Ähnliche Drahtlager zeigt die Schrift US 3,002,429. Ferner zeigt die Schrift JP 2008 138 736 A ein kleinere Wälzlager für einen Magnetdisc-Spieler, dessen Innenring auf einer Antriebswelle sitzt und dessen Außenring einen Schwenkarm trägt, wobei die beiden Innen- und Außenringe durch Vierpunkt-Lager aneinander abgestützt sind. Ferner ist aus der DE 10 2010 027 011 A1 ein Großwälzlager für eine Windkraftanlage gemäß dem Oberbegriff des Anspruchs 1 bekannt, dessen Außenring mit einer Nase in eine Nut im Innenring eingreift, wobei im Ringspalt zwischen Nase und Nut auf gegenüberliegenden Seiten der Nase jeweils eine Wälzkörperdoppelreihe vorgesehen ist, von denen eine eine Zweipunkt- oder Dreipunkt-Berührung und die andere eine Vierpunkt-Berührung aufweist. Weiterhin zeigt die Schrift DE 10 2012 004 329 A1 ein Wälzlager, das als Axiallager zwei Kugellagerreihen und als Radiallager ein Zylinderrollenlager besitzt.

In Anwendungen, bei denen neben hohen Axialkräften auch Radialkräfte abzufangen sind und insgesamt kompakt mit wenigen Lagerreihen gebaut werden soll, werden gerne Vierpunkt-Kugeldrehverbindungen eingesetzt. Solche Vierpunkt-Kugeldrehverbindungen oder Vierpunktlager sind Rillenkugellager mit relativ tief gerillten Laufbahnen bzw. relativ stark gewölbten Rillenlaufbahnen, die den darin laufenden Kugeln auch seitlichen Halt geben. Durch die Ausbildung der Kugellaufbahnen mit hohen Laufbahnschultern und einer oft vorgesehenen mittigen Auskehlung bilden sich für die Kugeln vier Lagerpunkte und dementsprechend durch diese Lagerpunkte gehende, sich kreuzende bzw. gespreizte Kraftabtragslinien, die den Druck gespreizt abtragen, so dass sowohl axiale als auch radiale Kräfte abgefangen werden können. Der Druckwinkel solcher Vierpunktlager beträgt üblicherweise etwa 35°, wobei jedoch auch Ausbildungen mit anderen Druckwinkeln von beispielsweise 25° bis 45° möglich sind.

Vorteilhafterweise können solche Vierpunkt-Kugeldrehverbindungen in Baumaschinen zum Einsatz kommen, insbesondere um die Drehbühne des Oberwagens um eine aufrechte Achse drehbar am Unterwagen abzustützen, beispielsweise an einem Bagger oder einem Mobil- bzw. Teleskopkran oder um an einem Turmdrehkran den Turm eines Untendrehers oder den Ausleger eines Obendrehers um eine aufrechte Achse drehbar zu lagern. Auch bei Windkraftanlagen kommen solche Vierpunkt-Kugeldrehverbindungen zum Einsatz, insbesondere um die Rotorblätter drehbar mit der Nabe zu verbinden und dementsprechend den Anstellwinkel der Rotorblätter verändern zu können.

Bei solchen Drehverbindungen mit großem Durchmesser und im Vergleich zum Durchmesser kleinem Ringquerschnitt, d.h. kleinen Querschnittsdimensionen des Außen- und Innenrings im Vergleich zu deren Durchmesser, hat die umgebende Anschlusskonstruktion, an der die Innen- und Außenringe befestigt sind, einen großen Einfluss auf das Trag- und Verformungsverhalten des Wälzlagers. Die genannten Vierpunkt-Kugeldrehverbindungen sind dabei insbesondere sehr empfindlich gegenüber den Verformungen der Anschlusskonstruktion. Wenn beispielsweise die umgebende Struktur die Lagerringe zwingt, sich zueinander zu verkippen, wie dies beispielsweise bei den Kippbeanspruchungen am Oberwagen eines Krans oder eines Baggers oder den weit auskragenden Rotorblättern der Fall ist, oder sich voneinander zu entfernen, neigen die genannten Vierpunkt-Kugeldrehverbindungen zum Kantentragen. Dabei bewegen sich die Kugeln nicht mehr wie vorgesehen eingebettet in der Laufbahnrille, sondern rollen entlang der Laufbahnschulter bzw. -kante. Die Lagerkräfte werden nicht mehr in der vorgesehenen Weise über die vorgenannten vier Lagerpunkte und die dafür vorgesehenen Lagerbahnsegmente abgetragen, sondern konzentrieren sich auf der Laufbahnschulter, entlang der die Kugeln beim Kantentragen abrollen. Dieses Kantentragen führt zu einer starken Überlastung der Laufbahnkante, welche hierdurch Schädigungen erfährt und schließlich sogar brechen kann, was zur Zerstörung des gesamten Lagers führen kann.

Der vorliegenden Erfindung liegt die Aufgabe zugrunde, ein verbessertes mehrreihiges Großwälzlager zu schaffen, das Nachteile des Standes der Technik vermeidet und Letzteren in vorteilhafter Weise weiterbildet. Insbesondere sollen Schädigungen oder gar eine Zerstörung der Laufbahnen durch Kantentragen vermieden werden, ohne hierfür die kompakte und sowohl axial als auch radial Kraft übertragende Bauweise von Vierpunktlagern opfern zu müssen.

Erfindungsgemäß wird die genannte Aufgabe durch ein mehrreihiges Wälzlager gemäß Anspruch 1 gelöst. Bevorzugte Ausgestaltungen der Erfindung sind Gegenstand der abhängigen Ansprüche.

Es wird also vorgeschlagen, mehrere Vierpunkt-Kugellagerreihen vorzusehen, jedoch so anzuordnen, dass Radialkräfte und Kippmomente auf die Lagerreihen näherungsweise gleichmäßig verteilt werden, während Axialbelastungen eine Lagerreihe deutlich stärker belasten als eine andere Lagerreihe. Durch eine solche wechselnde Arbeitsweise bzw. unterschiedliche Aufteilung der Lagerkräfte auf die verschiedenen Lagerreihen können die Vierpunktlager bestimmungsgemäß die auftretenden Lagerkräfte über ihre bestimmungsgemäßen Lagerpunkte und Laufbahnsegmente entsprechend den vorgesehenen Druckwinkeln abtragen, ohne dass die Kugeln gezwungen werden, entlang der Laufbahnkante zu rollen und es zu einem Kantentragen kommen würde.

Erfindungsgemäß sind die zumindest zwei jeweils als Vierpunkt-Kugellager ausgebildeten Lagerreihen auf gegenüberliegenden Axialseiten des Innenrings oder des Außenrings angeordnet, so dass bei Beaufschlagung des Innenrings oder des Außenrings mit einer Axialkraft eine der genannten Lagerreihen axial entlastet und die andere Lagerreihe axial belastet wird. Im Gegensatz zu mehrreihigen Lagerstrukturen, bei denen die Lagerreihen nebeneinander auf derselben Axialseite angeordnet und in beide Axialrichtungen gleichermaßen wirksam sind, arbeiten die auf gegenüberliegenden Axialseiten angeordneten Lagerreihen gemäß der vorliegenden Erfindung nach dem Wechselprinzip und fangen Axialkräfte jeweils nur in eine Richtung auf. Andererseits können hierdurch Kippmomente über die bestimmungsgemäßen Drucklinien der Vierpunktlager mit gegenläufigen Wirkrichtungen abgefangen und ein Abheben und damit ein Kantentragen an einer Lagerreihe verhindert werden.

Um die beiden Lagerreihen auf gegenüberliegenden Axialseiten eines Rings anordnen zu können, kann einer der Lagerringe eine radial vorspringende Ringnase besitzen, die in eine am anderen Lagerring vorgesehene Ringnut eingreift, wobei die beiden Lagerreihen auf gegenüberliegenden Axialseiten der radial vorspringenden Ringnase sitzen können. Vorteilhafterweise kann der Lagerring, in dem die die Ringnase umgreifende Ringnut zweiteilig oder mehrteilig ausgebildet sein, so dass die genannte Ringnut von mehreren Ringsegmenten gebildet ist. Insbesondere kann eine näherungsweise mittige teilende Ringnut vorgesehen sein und/oder der die Ringnut ausbildende Lagerring kann aus zwei Teilen bestehen, die die genannte Ringnase des anderen Lagerrings jeweils etwa hälftig umgreifen.

Je nach Ausbildung der Anschlussstruktur, insbesondere je nach Vorsehen einer Antriebsverzahnung kann entweder der Innenring oder der Außenring geteilt ausgebildet sein und/oder kann entweder der Innenring oder der Außenring die genannte Ringnase aufweisen, wobei es grundsätzlich aber auch möglich wäre, auch den die Ringnase bildenden Lagerring geteilt auszubilden. Vorteilhafterweise kann jedoch der genannte Lagerring, der die Ringnase ausgebildet, einteilig ausgebildet sein und/oder eine Antriebsverzahnung aufweisen.

In Weiterbildung der Erfindung kann die genannte radial vorspringende Ringnase am Innenring ausgebildet sein, während die Ringnut, die die Ringnase umgreift, an einem geteilten Außenring vorgesehen sein kann.

In alternativer Weiterbildung der Erfindung kann die genannte Ringnase aber auch am Außenring ausgebildet sein, während die die Ringnase umgreifende Ringnut an einem geteilten Innenring vorgesehen sein kann.

Die beiden genannten zumindest zwei Vierpunkt-Kugellagerreihen, die auf gegenüberliegenden Axialseiten eines der Lagerringe angeordnet sind, können in Weiterbildung der Erfindung zumindest näherungsweise denselben Durchmesser aufweisen und/oder in axialer Richtung miteinander fluchtend auf der genannten Ringnase sitzen. Grundsätzlich wäre es denkbar, die beiden Lagerreihen zueinander versetzt bzw. auf verschiedenen Teilkreisdurchmessern anzuordnen. Um eine symmetrische Kraft- und Momentenabtragung auch bei unterschiedlichen Drehrichtungen der Kippmomente zu erzielen, kann es jedoch vorteilhaft sein, die Vierpunkt-Kugellagerreihen symmetrisch verteilt anzuordnen.

Vorteilhafterweise können die beiden genannten Vierpunkt-Kugellagerreihen zumindest näherungsweise gleich groß dimensioniert sein, insbesondere Kugeln gleichen Durchmessers besitzen, und/oder auch hinsichtlich ihrer Druckwinkel zueinander näherungsweise identisch ausgebildet sein.

Die Druckwinkel der Lager können dabei vorteilhafterweise aus einem Druckwinkelbereich von 25° bis 45° gewählt sein, wobei beispielsweise ein Druckwinkel von etwa 35° vorteilhaft sein kann. Der vorgenannte Druckwinkel meint den Winkel der jeweiligen resultierenden, bestimmungsgemäßen Kraftabtragslinie zur Axialrichtung, so dass beispielsweise bei axialer Lagerbelastung der Winkel zwischen den beiden gespreizten resultierenden Kraftabtragslinien 2 x 35° beträgt, wenn das Vierpunktlager mit einem Druckwinkel von 35° ausgebildet ist.

Die beiden genannten Vierpunkt-Wälzlagerreihen bilden die beiden einzigen Lagerreihen des Wälzlagers, welches als zweireihiges Vierpunkt-Kugelwälzlager ausgebildet ist. Um eine kompakte, einfach aufgebaute und dennoch mehrachsig hoch belastbare Lagerausbildung zu erzielen, weist das Lager nur die beiden vorgenannten Vierpunkt-Kugellagerreihen auf.

Die Laufbahnen der genannten Vierpunkt-Lagerreihen sind erfindungsgemäß integral einstückig, materialhomogen an den Außen- und Innenringen ausgebildet, insbesondere an den Axialseiten der vorgenannten Ringnase und den seitlichen Flanken der genannten Ringnut. Dabei ist auf Laufbahneinsätze wie Lagerdrähte und dergleichen verzichtet.

Die Erfindung wird nachfolgend anhand eines bevorzugten Ausführungsbeispiels und zugehöriger Zeichnungen näher erläutert. In den Zeichnungen zeigen:
- Fig. 1:: einen Halbschnitt durch ein zweireihiges Wälzlager mit zwei Vierpunkt-Kugellagerreihen gemäß einer vorteilhaften Ausführung der Erfindung, und
- Fig. 2:: einen Halbschnitt durch das Lager aus Fig. 1 in drei Teilansichten, die jeweils den Kraftfluss durch das Lager in unterschiedlichen Belastungsfällen zeigen.

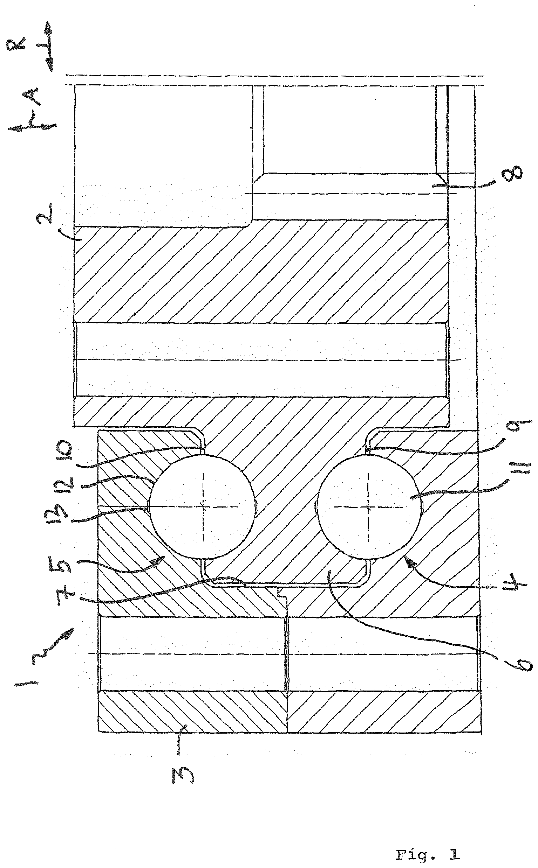

Wie Fig. 1 zeigt, umfasst das Wälzlager 1 zwei zueinander verdrehbare Lagerringe in Form eines Innenrings 2 und eines Außenrings 3, zwischen denen zwei Wälzlagerreihen 4 und 5 vorgesehen sind, um die beiden Lagerringe gegeneinander verdrehbar abzustützen.

Die beiden Lagerringe 2 und 3 können dabei ineinandergreifend konturiert sein, wobei die Wälzlagerreihen 4 und 5 im Bereich der ineinandergreifenden Konturen positioniert sind. Insbesondere kann einer der Lagerringe eine radial vorspringende Ringnase 6 aufweisen, die von einer Ringnut 7, die in dem anderen Lagerring ausgebildet ist, umgriffen wird. Wie Fig. 1 zeigt, kann die radial vorspringende Ringnase 6 an dem Innenlagerring 2 vorgesehen sein und außenumfangsseitig vorspringen, während die Ringnut 7 an dem Außenring 3, insbesondere an dessen Innenumfangsseite vorgesehen sein kann.

Vorteilhafterweise ist der die Ringnut 7 aufweisende Lagerring geteilt ausgebildet, wobei die Teilungsebene radial orientiert sein und etwa mittig durch die Ringnut 7 gehen kann.

Der die Ringnase 6 aufweisende Lagerring kann einteilig ausgebildet sein, wobei an dem einteiligen Lagerring eine Verzahnung 8 vorgesehen sein kann, die umfangsseitig angeordnet sein kann. Alternativ wäre es jedoch ebenfalls möglich, den verzahnten Lagerring mehrteilig auszubilden und/oder den die Ringnut 7 aufweisenden Lagerring einteilig auszubilden.

Wie Fig. 1 zeigt, sitzen auf den gegenüberliegenden Axialseiten 9 und 10 der Ringnase 6 die beiden Wälzlagerreihen 4 und 5. Insbesondere kann auf jeder Axialseite 9 und 10 der Ringnase 6 genau eine Wälzlagerreihe 4 bzw. 5 angeordnet sein, um den Außenring 3 drehbar am Innenring 2 abzustützen.

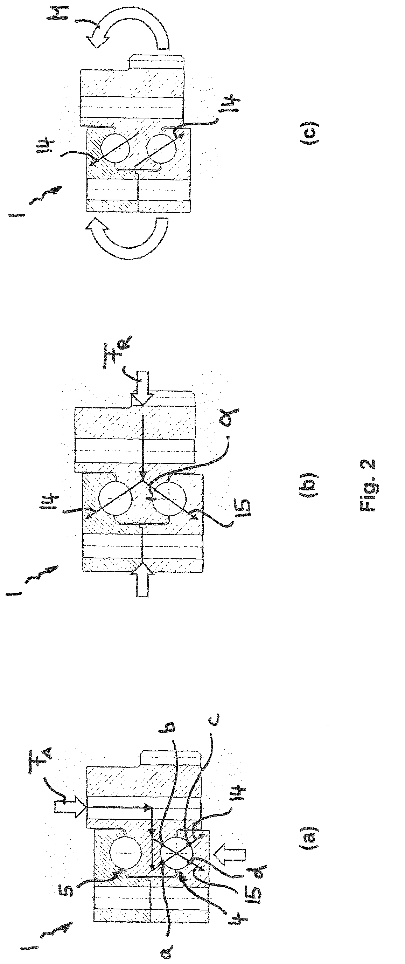

Die beiden Wälzlagerreihen 4 und 5 sind als Vierpunkt-Kugellager ausgebildet, so dass jede der Wälzlagerreihen 4 und 5 sowohl Axialkräfte als auch Radialkräfte übertragen kann. Die Kugeln 11 laufen dabei jeweils in rillenförmigen Laufbahnen 12, die durch eine etwa mittige Auskehlung 13 in zwei Laufbahnsegmente unterteilt sein können und vier Lagerpunkte a, b, c, d für jede Kugel 11 definieren können, vgl. Fig. 2 (a). Die genannten Laufbahnen 12 weisen dabei hochgezogene Laufbahnschultern auf, so dass sich jede Laufbahn 12 um einen Sektor von mehr als 150°, insbesondere auch um näherungsweise 180° um die jeweilige Kugel 11 schmiegt. Die Laufbahnen 12 können dabei insbesondere derart konturiert sein, dass die durch die genannten Lagerpunkte a, b, c und d gehenden Kraftabtragslinien 14 und 15 der resultierenden Lagerkräfte unter einem Druckwinkel α im Bereich von 25° bis 40°, insbesondere etwa 35° zur Axialrichtung A geneigt sind, vgl. Fig. 2.

Vorteilhafterweise sind die genannten Laufbahnen 12 in Axialrichtung orientiert, d.h. eine mittig durch die jeweilige Laufbahn 12 gehende Senkrechte kann sich zumindest näherungsweise parallel zur Axialrichtung A erstrecken. Die Hauptabtragsrichtung der Wälzlagerreihen 4 und 5 kann jeweils axial sein. Die jeweilige Wälzlagerreihe 4 und 5 kann größere Axialkräfte und kleinere Radialkräfte abtragen.

Wie Fig. 1 zeigt, können die beiden Wälzlagerreihen 4 und 5 zumindest näherungsweise identische Lagerdurchmesser besitzen. Die Kugeln 11 der beiden Lagerreihen 4 und 5 können ebenfalls gleiche Durchmesser besitzen. Ferner können die Wälzlagerreihen 4 und 5 hinsichtlich des vorgenannten Druckwinkels α zumindest näherungsweise identisch zueinander ausgebildet sein.

Wie Fig. 2 verdeutlicht, arbeiten die auf gegenüberliegenden Axialseiten der Ringnase 6 angeordneten Vierpunkt-Kugellagerreihen 4 und 5 nach dem Wechselprinzip.

Insbesondere werden Axialkräfte F_{A} auf das Wälzlager 1 von nur einem der beiden Wälzlagerreihen 4 oder 5 abgetragen, wobei je nach Wirkrichtung der Axialkraft F_{A} die eine oder die andere Wälzlagerreihe 4 oder 5 aktiv wird, vgl. Fig. 2, dort Teilansicht (a). Drückt beispielsweise die in Fig. 2(a) dargestellte Axialkraft F_{A} den Innenring 2 nach unten, stützt die untere Wälzlagerreihe 4 den Innenring 2 am Außenring 3 ab und fängt die genannte Axialkraft ab. Wenn umgekehrt eine Axialbelastung den Außenring 3 nach unten und den Innenring 2 nach oben drücken würde, wird das obere Vierpunktlager 5 aktiv. Die jeweils Kraft tragende Wälzlagerreihe 4 oder 5 trägt die Axialkräfte dabei über die gespreizten Kraftlinien 14 und 15 unter dem Druckwinkel α entsprechend der Ausbildung als Vierpunktlager ab.

Wirken Radialkräfte auf die Lagerringe 2 und 3, vgl. Teilansicht (b) der Fig. 2, wird eine solche Radialkraft F_{R} gleichmäßig über beide Wälzlagerreihen 4 und 5 abgetragen, wobei hier jeweils eine der Kraftlinien 14 und 15 jedes Vierpunktlagers abstützend wirkt.

Wirken durch Verformungen der umgebenden Anschlusskonstruktion Verwindungs- bzw. Verkrempelungsmomente auf die Lagerringe 2 und 3, die die beiden Lagerringe 2 und 3 gegeneinander zu verwinden versuchen, vgl. Teilansicht (c) der Fig. 2, wird ein solches Verwindungsmoment M ebenfalls über beide Wälzlagerreihen 4 und 5 abgefangen, indem an jedem Vierpunktlager 4 bzw. 5 eine der Kraftlinien 14 und 15 aktiv wird, wobei in diesem Fall gegenläufige Kraftlinien aktiv werden, um das Moment M abzufangen, vgl. Fig. 2(c). Das Wälzlager 1 sperrt sich hierdurch effektiv gegen die Verkrempelung, wodurch ein Kantentragen verhindert werden kann. Die Vierpunktlager tragen regulär über jeweils zwei ihrer vier Lagerpunkte.

## Patentansprüche

1. Mehrreihiges Großwälzlager mit einem Ringdurchmesser von mehr als 1m, umfassend einen Innenring (2), einen Außenring (3) sowie zumindest zwei Wälzlagerreihen (4, 5) zwischen Innen- und Außenring (2, 3), wobei die zumindest zwei Wälzlagerreihen (4, 5) jeweils als Vierpunkt-Kugellager zum Abstützen von axialen und radialen Kräften ausgebildet und mit ihren Laufflächen (12) zumindest näherungsweise in Axialrichtung (A) orientiert sind, wobei die genannten Wälzlagerreihen (4, 5) auf gegenüberliegenden Axialseiten (9, 10) des Innenrings (2) oder des Außenrings (3) angeordnet sind, so dass bei Beaufschlagung des Innenrings (2) oder des Außenrings (3) mit einer Axialkraft (F_{A}) eine der genannten Wälzlagerreihen (4, 5) axial entlastet und die andere der genannten Wälzlagerreihen (4, 5) axial belastet wird, wobei die Laufbahnen (12) integral einstückig, materialhomogen an den Innen- und Außenringen (2, 3) frei von Laufbahneinsätzen wie Lagerdrähten ausgebildet sind, **dadurch gekennzeichnet, dass** genau zwei Wälzlagerreihen (4, 5) vorgesehen sind und die Laufbahnen (12) der genannten Vierpunkt-Kugellager hochgezogene Laufbahnschultern aufweisen, sodass sich jede Laubahn (12) um einen Sektor von mehr als 150° um die jeweilige Kugel (11) schmiegt.

2. Mehrreihiges Großwälzlager nach dem vorhergehenden Anspruch, wobei die beiden Wälzlagerreihen (4, 5) auf gegenüberliegenden Axialseiten (9, 10) einer radial vorspringenden Ringnase (6) sitzen, die in einer von mehreren Ringsegmenten gebildeten Ringnut (7) eingreift.

3. Mehrreihiges Großwälzlager nach dem vorhergehenden Anspruch, wobei die Ringnase (6) am Innenring (2) an dessen Außenumfangsseite ausgebildet und die Ringnut (7) an der Innenumfangsseite des Außenrings (3), der geteilt ausgebildet ist, vorgesehen ist.

4. Mehrreihiges Großwälzlager nach Anspruch 2, wobei die Ringnase (6) am Außenring (3) an dessen Innenumfangsseite ausgebildet und die Ringnut (7) an der Außenumfangsseite des Innenrings (2), der geteilt ausgebildet ist, vorgesehen ist.

5. Mehrreihiges Großwälzlager nach einem der vorhergehenden Ansprüche, wobei die beiden Wälzlagerreihen (4, 5) axial fluchtend zueinander angeordnet sind und/oder denselben Lagerdurchmesser besitzen.

6. Mehrreihiges Großwälzlager nach einem der vorhergehenden Ansprüche, wobei die beiden Wälzlagerreihen (4, 5) Kugeln desselben Durchmessers besitzen und dieselben Druckwinkel (a) aufweisen.

7. Mehrreihiges Großwälzlager nach einem der vorhergehenden Ansprüche, wobei die Vierpunkt-Kugellager der Wälzlagerreihen (4 und 5) Druckwinkel (a) ihrer Kraftabtragslinien (14, 15) zur Axialrichtung (A) im Bereich von 30° bis 40° besitzen.

8. Mehrreihiges Großwälzlager nach einem der vorhergehenden Ansprüche, wobei die Laufflächen (12) jeweils durch eine mittige Auskehlung (13) in zwei Laufbahnsegmente unterteilt sind.

9. Mehrreihiges Großwälzlager nach einem der vorhergehenden Ansprüche, wobei zumindest einer der Innen- oder Außenringe (2, 3) mit einer Verzahnung (8) versehen ist, wobei insbesondere der die Ringnase (6) aufweisende, einteilig ausgebildete Lagerring die Verzahnung (8) aufweist.

10. Baumaschine, insbesondere Kran oder Bagger, mit einem mehrreihigen Wälzlager (1), das gemäß einem der vorhergehenden Ansprüche ausgebildet ist.

11. Baumaschine nach dem vorhergehenden Anspruch, wobei das mehrreihige Wälzlager (1) eine Drehbühne der Baumaschine um eine aufrechte Achse drehbar an einem Unterwagen der Baumaschine lagert.

12. Windkraftanlage mit einem Rotor, der mehrere an einer Nabe verstellbar gelagerte Rotorblätter aufweist, wobei zumindest ein mehrreihiges Wälzlager (1), das gemäß einem der vorhergehenden Ansprüche ausgebildet ist, zum Lagern eines Rotorblatts an der Nabe oder zum Lagern der Nabe an einer Gondel der Windkraftanlage vorgesehen ist.

## Claims

1. A multirow large roller bearing having a ring diameter of more than 1 m comprising an inner ring (2), an outer ring (3), and at least two roller bearing rows (4, 5) between the inner and outer rings (2, 3), wherein the at least two roller bearing rows (4, 5) are each configured as four point ball bearings for supporting axial and radial forces and their running surfaces (12) are oriented at least approximately in the axial direction (A); wherein said roller bearing rows (4, 5) are arranged on oppositely disposed axial sides (9, 10) of the inner ring (2) or of the outer ring (3) so that, on a loading of the inner ring (2) or of the outer ring (3) by an axial force (F_{A}), one of said roller bearing rows (4, 5)I is axially relieved and the other one of said roller bearing rows (4, 5) is axially loaded; and wherein the raceways (12) are formed integrally in one piece with material homogeneity at the inner and outer rings (2, 3) free of raceway inserts such as bearing wires,
**characterized in that** exactly two roller bearing rows (4, 5) are provided and the raceways (12) of said four point ball bearings have raised raceway shoulders so that each raceway (12) nestles around a sector of more than 150° around the respective ball (11).

2. A multirow large rolling bearing in accordance with the preceding claim, wherein the two rolling bearing rows (4, 5) are seated on oppositely disposed axial sides (9, 10) of a radially projecting ring nose (6) that engages into a ring groove (7) formed by a plurality of ring segments.

3. A multirow large rolling bearing in accordance with the preceding claim, wherein the ring nose (6) is provided at the inner ring (2), formed at its outer peripheral side, and the ring groove (7) is provided at the inner peripheral side of the outer ring (3) that is formed as split.

4. A multirow large rolling bearing in accordance with claim 2, wherein the ring nose (6) is provided at the outer ring, formed at its inner peripheral side, and the ring groove (7) is provided at the outer peripheral side of the inner ring (2) that is formed as split.

5. A multirow large roller bearing in accordance with one of the preceding claims, wherein the two roller bearing rows (4, 5) are arranged axially aligned with one another and/or have the same bearing diameter.

6. A multirow large roller bearing in accordance with one of the preceding claims, wherein the two roller bearing rows (4, 5) have balls of the same diameter and have the same pressure angle (α).

7. A multirow large roller bearing in accordance with one of the preceding claims, wherein the four point ball bearings of the roller bearing rows (4 and 5) have pressure angles (α) to the axial direction in the range from 30° to 40°.

8. A multirow large roller bearing in accordance with one of the preceding claims, wherein the running surfaces (12) are each divided into two raceway segments by a central channel (13).

9. A multirow large roller bearing in accordance with one of the preceding claims, wherein at least one of the inner or outer rings (2, 3) is provided with a toothed portion (8), with in particular the bearing ring having the ring nose (6) and formed in one piece having said toothed portion (8).

10. A construction machine, in particular a crane or an excavator, comprising a multirow roller bearing (1) that is configured in accordance with one of the preceding claims.

11. A construction machine in accordance with the preceding claim, wherein the multirow roller bearing (1) supports a slewing platform of the construction machine rotatably about an upright axis at an undercarriage of the construction machine.

12. A wind turbine having a rotor that has a plurality of rotor blades adjustably supported at a hub, wherein at least one multirow roller bearing (1) that is configured in accordance with one of the preceding claims is provided to support a rotor blade at the hub or to support the hub at a nacelle of the wind turbine.

## Revendications

1. Palier à roulement de grande dimension à plusieurs rangées doté d'un diamètre de bague supérieur à 1 m, comprenant une bague intérieure (2), une bague extérieure (3) ainsi qu'au moins deux rangées de roulement (4, 5) entre les bagues intérieure et extérieure (2, 3), les au moins deux rangées de roulement (4, 5) étant réalisées respectivement sous la forme de roulement à billes à quatre points de contact pour supporter des forces axiales et radiales et étant orientées avec leurs surfaces de roulement (12) au moins approximativement dans la direction axiale (A), lesdites rangées de roulement (4, 5) étant disposées sur des côtés axiaux (9, 10) opposés de la bague intérieure (2) ou de la bague extérieure (3), de telle sorte que, lors de la soumission de la bague intérieure (2) ou de la bague extérieure (3) à une force axiale (F_{A}), une desdites rangées de roulement (4, 5) est déchargée axialement et l'autre desdites rangées de roulement (4, 5) est sollicitée axialement, les chemins de roulement (12) étant réalisés d'un seul tenant, avec homogénéité de matériau sur les bagues intérieure et extérieure (2, 3) sans élément de chemin de roulement rapporté tel que des fils de roulement en métal,
**caractérisé en ce que** deux rangées de roulement (4, 5) exactement sont prévues et les chemins de roulement (12) desdits roulements à billes à quatre points de contact comportent des épaulements de chemin de roulement surélevés, de telle sorte que chaque chemin de roulement (12) se love autour d'un secteur de plus de 150° autour de la bille (11) respective.

2. Palier à roulement de grande dimension à plusieurs rangées selon la revendication précédente, dans lequel les deux rangées de roulement (4, 5) se trouvent sur des côtés axiaux (9, 10) opposés d'un talon de bague (6) faisant saillie radialement, qui vient en prise dans une rainure de bague (7) formée par plusieurs segments de bague.

3. Palier à roulement de grande dimension à plusieurs rangées selon la revendication précédente, dans lequel le talon de bague (6) est prévu réalisé sur la bague intérieure (2) sur le côté périphérique extérieur de celle-ci et la rainure de bague (7) est prévue sur le côté périphérique intérieur de la bague extérieure (3), qui est réalisé en plusieurs parties.

4. Palier à roulement de grande dimension à plusieurs rangées selon la revendication 2, dans lequel le talon de bague (6) est prévu réalisé sur la bague extérieure (3) sur le côté périphérique intérieur de celle-ci et la rainure de bague (7) est prévue sur le côté périphérique extérieur de la bague intérieure (2), qui est réalisée en plusieurs parties.

5. Palier à roulement de grande dimension à plusieurs rangées selon l'une des revendications précédentes, dans lequel les deux rangées de roulement (4, 5) sont disposées en alignement axial l'une avec l'autre et/ou possèdent le même diamètre de palier.

6. Palier à roulement de grande dimension à plusieurs rangées selon l'une des revendications précédentes, dans lequel les deux rangées de roulement (4, 5) possèdent des billes de diamètre identique et présentent les mêmes angles de pression (a).

7. Palier à roulement de grande dimension à plusieurs rangées selon l'une des revendications précédentes, dans lequel les roulements à billes à quatre points de contact des rangées de roulement (4 et 5) possèdent des angles de pression (a) de leurs lignes d'élimination de force (14, 15) par rapport à la direction axiale (A) compris entre 30° et 40°.

8. Palier à roulement de grande dimension à plusieurs rangées selon l'une des revendications précédentes, dans lequel les surfaces de roulement (12) sont respectivement divisées en deux segments de chemin de roulement par une cannelure (13) centrale.

9. Palier à roulement de grande dimension à plusieurs rangées selon l'une des revendications précédentes, dans lequel au moins une de la bague intérieure ou extérieure (2, 3) est pourvue d'une denture (8), la bague de palier comportant le talon de bague (6) et réalisée d'un seul tenant comportant en particulier la denture (8).

10. Machine de chantier, en particulier grue ou excavatrice, comprenant un palier à roulement (1) à plusieurs rangées, qui est réalisé selon l'une des revendications précédentes.

11. Machine de chantier selon la revendication précédente, dans laquelle le palier à roulement (1) à plusieurs rangées supporte une tourelle de la machine de chantier de manière rotative sur un axe vertical, sur un châssis inférieur de la machine de chantier.

12. Éolienne comprenant un rotor, qui comporte plusieurs pales de rotor montées de manière réglable sur un moyeu, dans laquelle au moins un palier à roulement (1) à plusieurs rangées, qui est réalisé selon l'une des revendications précédentes, est prévu pour le support d'une pale de rotor sur le moyeu ou pour le support du moyeu sur une nacelle de l'éolienne.
